# EUROPEAN PATENT APPLICATION

(11) **EP 4 725 735 A1**
(43) Date of publication of application: **15.04.2026**
(21) Application number: 24205806.3
(22) Date of filing: 10.10.2024
(51) Int. Cl.: B60K 7/00, B60G 3/20, B60G 15/06, F16H 57/039, F16H 57/02

(54) **IN-WHEEL DRIVE ASSEMBLY FOR A VEHICLE**

(71) Applicant: Ntdenergy, S.L., 31500 Tudela (ES)
(72) Inventor: ARRONDO GIL, Ricardo, Tudela (ES)
(74) Representative: Isern Patentes y Marcas S.L.

(57) **Abstract**

An in-wheel drive assembly of a vehicle intended to be mounted on a vehicle chassis comprising a suspension system configured to be coupled to the chassis; a steering knuckle configured to rotate with respect to the suspension system; an in-wheel electric motor coupled to the steering knuckle configured to provide torque to the wheel and rotate the same; a brake system coupled to the steering knuckle; and a steering system linked to the steering knuckle coupled to the suspension system, said steering system being configured to enable the rotation of the steering knuckle relative to the suspension system with respect to an axis substantially perpendicular to the warp and yaw axes of the chassis; wherein the suspension system is of the double wishbone type with pushrod type shock dampening, such that the steering knuckle is at least partially housed in said suspension system.

## Description

### Technical field of the invention

The present invention relates to a drive for a vehicle, in particular to a drive assembly intended to be mounted in a vehicle wheel, wherein the assembly brings together different subsystems such as steering, suspension and in-wheel drive, known as an "in-wheel" motor, achieving a compact transmission that optimises the space between components and improves the dynamic behaviour of the vehicle carrying said assembly.

### State of the art

Electric cars with independent steering and four-wheel drive are becoming increasingly popular in the automotive sector. In addition, electric vehicles of this type with independent four-wheel drive motors can also have motors intended to independently control steering in the four wheels, thereby replacing the traditional motor drive and also replacing the steering linkage, so that in addition to high drive efficiency, efficient steering control of the vehicle can also be achieved. In addition, the four wheels are capable of rotating with a large steering angle, which greatly increases the flexibility of the cars in motion.

An example of transmissions of this type is document ES2405846B1 which discloses a steering system for electric vehicles, arranged in each of the wheels of the vehicle, comprising a suspension and a steering mechanism actuated by two motors simultaneously, said motors being mounted on planes parallel to the suspension. One or both motors are electric, hydraulic or pneumatic, and act directly on the steering mechanism, wherein said motors are arranged in the direction of the shock absorber of the suspension or at any angle with respect to same, even to the point of being horizontal.

Another example of transmissions of this type is disclosed in application EP3947108A1 which discloses a drive device for a vehicle, the drive device comprising a rotary interface arranged to be mounted on the vehicle, wherein the rotary interface is rotatably coupled to a mounting arm to allow continuous rotation of the mounting arm in a clockwise and counter-clockwise direction that is substantially perpendicular to the longitudinal and transverse axis of the vehicle; and a first electric motor having a stator and a rotor, wherein the stator is coupled to the mounting arm to allow the axis of the rotor to be substantially perpendicular to the axis of rotation of the rotary interface, wherein the rotor is arranged to be coupled to a wheel of the vehicle to allow the electric motor to provide a driving torque to the wheel.

Despite the above developments, further progress is still needed in in-wheel drive assemblies of this type aimed at optimising space while maintaining good dynamic behaviour of the vehicle.

### DESCRIPTION

In order to respond to the detected needs, the present invention provides an in-wheel drive assembly of a vehicle as disclosed in claim 1. The objective of the invention is to bring together a series of subsystems such as steering, suspension and drive in a single assembly that can be assembled/disassembled from the vehicle.

Preferred embodiments of said assembly are set forth in the claims dependent on claim 1.

According to a first embodiment, the in-wheel drive assembly of a vehicle of the invention, hereinafter referred to as assembly, is intended to be coupled to a chassis of a vehicle prepared for such purpose, the assembly comprising:
- a *suspension system configured to be coupled to the chassis,*
- *a steering knuckle linked to the suspension system, configured to rotate with respect to the suspension system,*
- *an in-wheel electric motor coupled to the steering knuckle configured to provide torque to the wheel and rotate the same,*
- *a brake system coupled to the steering knuckle, and*
- *a steering system linked to the steering knuckle coupled to the suspension system, said steering system being configured to enable the rotation of the steering knuckle relative to the suspension system with respect to an axis substantially perpendicular to the longitudinal and transverse axes of the vehicle,*
   *wherein the suspension system is of the double wishbone type with push-rod type shock dampening, such that the steering knuckle is at least partially housed in said suspension system.*

The configuration of the double wishbone suspension system with push-rod type shock dampening provides a number of technical advantages which are described below.

Firstly, there is improved suspension. In this sense, similar in-wheel motor drive assemblies have shock dampers that are shorter than the diameter of the rim, which have excessively short shock dampening strokes, which in turn causes such shock dampers to be excessively rigid, which has negative consequences on the dynamic behaviour of the vehicle, as well as comfort. Contrary to this, the proposed suspension system allows the integration of sufficiently large and optimised shock dampers to offer adequate dynamic behaviour of the vehicle without transferring uncomfortable vibrations to the occupants.

In addition to the above, a suspension system such as that proposed for the claimed assembly marks the arms of said suspension as the highest point, which is, in any case, less than the diameter of the tyre itself. Due to this, the platforms into which the proposed assembly can be integrated can allow for much lower upper heights and therefore, diversify their functionality far more.

Furthermore, the claimed suspension system enables the arrangement of an in-wheel electric motor having larger dimensions than those usually found in similar assemblies.

Moreover, the steering knuckle is the central element of the claimed in-wheel drive assembly since it integrates therein the steering system, the brake system, and the electric motor, wherein the steering knuckle is linked to the chassis by the suspension system.

According to the foregoing, in an alternative embodiment, the suspension system comprises an upper arm and a lower arm, each coupled by means of a hinged joint to the chassis, which allows said arms to tilt, wherein the steering knuckle is linked to said upper and lower arms in such a way that it is interposed therebetween.

With regard to the expressions upper and lower, given that the assembly is intended to be mounted on a rolling vehicle, that is, a car, in particular an electrically powered car, the term lower, referring to an element, is understood as that element which, when mounted on the vehicle, is located closer to the ground, while upper is the opposite of the foregoing.

Furthermore, the suspension system comprises a shock damper with a first end coupled to the chassis and a second end coupled to a tilting mechanism which is configured to push the shock damper when the upper arm tilts. Since, as indicated, the configuration of the proposed shock damper is of the push-rod type, the coupling point of the first end of said shock damper is located towards the inside of the chassis, directed towards a central axis or warp axis and/or towards a yaw axis of said chassis, while the coupling point of the second end is further away from said axes and is closer to the wheel.

According to the arrangement of the shock damper in relation to the chassis and the tilting mechanism, when the upper arm tilts in the positive direction of the yaw axis, said upper arm pushes the shock damper (pushing).

In an alternative embodiment of the invention, the steering system comprises a crown wheel solidly linked to the steering knuckle, such that the movement of the crown wheel is transmitted to the steering knuckle, and a worm screw meshed with the crown wheel intended to rotate the latter. The instantaneous axis of rotation of the crown wheel is arranged such that it is parallel to the yaw axis of the chassis, such that the elements solidly attached to the steering knuckle, including the wheel, rotate with respect to said axis of rotation when the crown wheel is actuated by the screw.

The steering system is configured to enable wheel rotation up to 90 degrees. Thus, the steering knuckle can rotate up to 90 degrees in relation to the axis of rotation of the crown wheel.

Advantageously, the crown wheel - worm screw arrangement is self-locking in and of itself, since the only way to rotate the crown wheel is by rotating the screw, otherwise the crown wheel remains motionless, this being a mechanical condition that makes the rotation of the assembly impossible, unless, as has been said, the screw is actuated.

In an alternative embodiment, the steering system comprises a housing that is couplable to the steering knuckle, such that the crown wheel and the screw are arranged in said housing.

Advantageously, the proposed assembly, due to the arrangement of the suspension system and the steering knuckle 4, allows the use of electric motors having larger dimensions than those used in other similar assemblies, as well as conventional car brake systems, allowing the use of standardised components, which makes it much more flexible to use the assembly on different vehicle platforms.

### Brief description of the figures

The foregoing and other advantages and features will be more fully understood from the following detailed description of exemplary embodiments with reference to the accompanying drawings, which should be considered by way of illustration and not limitation, wherein:
- Fig. 1 is a perspective view of the in-wheel drive assembly of a vehicle, seen from the shock absorber
- Fig. 2 is a perspective view of the in-wheel drive assembly of a vehicle, seen from the steering knuckle.
- Fig. 3 is a perspective view of the steering system

### Detailed description of an exemplary embodiment

In the following detailed description, numerous specific details are set forth in the form of examples to provide a thorough understanding of the relevant teachings. However, it will be apparent to those skilled in the art that the present teachings can be implemented without such details.

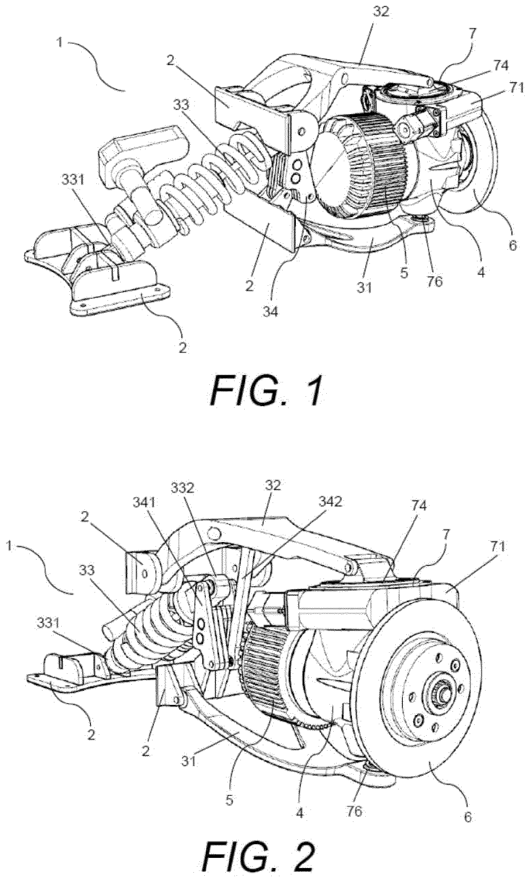

As can be seen in Figures 1 and 2, the present invention provides an in-wheel drive assembly 1 of a vehicle, hereinafter referred to as assembly 1, intended to be mounted on a vehicle chassis 2 (not shown), wherein said assembly 1 comprises a suspension system 3 configured to be coupled to the chassis 2.

As can be seen in the figures, the suspension system 3 is of the double wishbone type with push-rod type shock dampening and, therefore, comprises an upper arm 32 and a lower arm 31, each coupled by means of a hinged joint to the chassis 2, and a tilting mechanism 34 configured to push a shock damper 33 when the upper arm 31 tilts.

In turn, the shock damper 33 comprises a first end 331 hingedly coupled to the chassis 2 and a second end 332 hingedly coupled to the tilting mechanism 34. Regarding the tilting mechanism 34, it comprises a rocker arm 341 coupled in a tilting manner by a pivot point to the chassis 2. As such, the second end 332 of the shock damper 33 is connected to the rocker arm 341, while, in turn, said rocker arm 341 is connected to the upper arm 32 of the suspension system 3 via a coupling rod 342. Thus, the tilting movement of the upper arm 32 is transmitted to the shock absorber 33 and vice versa.

As can be seen in the figures, the coupling point with the chassis 2 of the first end 331 of the shock damper 33 is located towards the inside of the chassis 2, directed towards a central axis or warp axis and/or towards a yaw axis of said chassis 2, while the coupling point of the second end 332 is further away from said axes and is closer to the wheel (not shown).

As can be seen in the figures, the orientation of the shock damper 33 towards the central or warp axis of the chassis 2 allows delimiting the highest point of the assembly 1 to be marked by the tyre itself (not shown). Due to this, the platforms or chassis into which this assembly 1 can be integrated can allow for much lower upper heights and therefore, diversify their functionality far more.

Moreover, the assembly 1 comprises a steering knuckle 4, linked to the suspension system 3 and configured to rotate with respect to the same.

The steering knuckle 4 is interposed between the upper 32 and lower 31 arms of said suspension system 3. In particular, the steering knuckle 4 is suspended from said arms 31 and 32 by means of a steering system 7. The steering knuckle 4 functions as an integrating element of the assembly 1 of the invention, as will be described below.

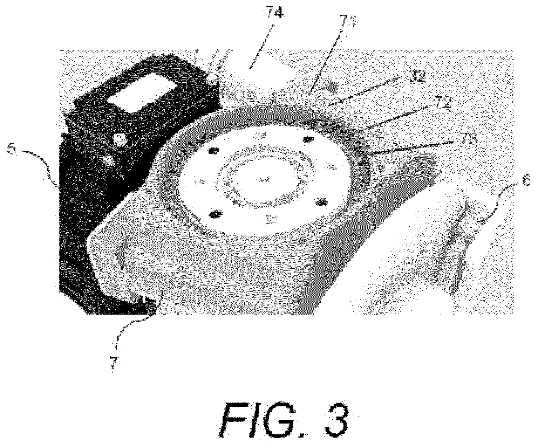

As can be seen in Figure 3, the steering system 7 comprises a crown wheel 72 with which a worm screw 73 is meshed, which are arranged in a housing 71, this housing being couplable to the steering knuckle 4. In turn, the crown wheel 72 is coupled in a tilting manner to the upper arm 32 of the suspension system 3 by means of a flange 74, wherein the latter is fixed to the crown wheel 72.

The screw 73 is actuated by a motor 75 connected thereto. Thus, when the screw 73 is actuated, due to its coupling with the flange 74, the crown wheel 72 remains static, while the screw 73 rotates around the same in relation to the instantaneous axis of rotation, such that the housing 71 and, therefore, the steering knuckle 4 solidly fastened to said housing 71 also rotate. Therefore, to enable this rotation, the steering system 7 comprises a ball joint 76 suitable for connecting the steering knuckle 4 to the lower arm 31.

It is important to note that the instantaneous axis of rotation (not shown) of the crown wheel 72 is parallel to the yaw axis of the chassis 2, such that the steering knuckle 4 rotates with respect to this yaw axis.

Continuing with the steering knuckle 4, it is essentially a hollow body, structurally resistant to withstand the dynamic loads to which these components are subjected, where, in addition to the housing 71 of the steering system 7, an in-wheel electric motor 5, hereinafter referred to as motor 5, and a brake system 6 are also couplable.

One of the particular features of the proposed assembly 1 and, in particular, of the arrangement of the steering knuckle 4, is that electric motors having larger dimensions than those used in other similar assemblies, as well as conventional car brake systems, can be used.

Since the motor 5 and the brake system 7 can be of the conventional type, it is not considered necessary to make further explanations in this regard.

## Claims

1. An in-wheel drive assembly (1) of a vehicle intended to be mounted on a vehicle chassis comprising:
- a suspension system (3) configured to be coupled to the chassis (2);
- a steering knuckle (4) configured to rotate with respect to the suspension system (3);
- an in-wheel electric motor (5) coupled to the steering knuckle (4) configured to provide torque to the wheel and rotate the same;
- a brake system (6) coupled to the steering knuckle (4); and
- a steering system (7) linked to the steering knuckle (4) coupled to the suspension system (3), said steering system (7) being configured to enable the rotation of the steering knuckle (4) relative to the suspension system (3) with respect to an axis substantially perpendicular to the warp and yaw axes of the chassis;
wherein the suspension system (3) is of the double wishbone type with push-rod type shock dampening, such that the steering knuckle (4) is at least partially housed in said suspension system (3).

2. The assembly (1) according to claim 1, wherein the suspension system (3) comprises an upper arm (32) and a lower arm (31), each coupled by means of a hinged joint to the chassis (2), wherein the steering knuckle (4) is interposed between the upper (32) and lower (31) arms of said suspension system (3).

3. The assembly (1) according to claim 2, wherein the suspension system (3) comprises a shock absorber (33) with a first end (331) coupled to the chassis (2) and a second end (332) coupled to a tilting mechanism (34) which is configured to push the shock absorber (33) when the upper arm (31) tilts.

4. The assembly (1) according to any of the preceding claims, wherein the steering system (7) comprises a crown wheel (72) solidly linked to the steering knuckle (4) and a worm screw (73) meshed with the crown wheel (72) intended to rotate the latter, wherein the rotation of the crown wheel (72) causes the rotation of the steering knuckle (4).

5. The assembly (1) according to the preceding claim, wherein the steering system (7) comprises a housing (71) couplable to the steering knuckle (4), wherein the crown wheel (72) and the screw (73) are arranged in said housing (71).

6. A vehicle **characterised in that** it comprises the in-wheel drive assembly (1) of claims 1 to 5.
